# EUROPEAN PATENT APPLICATION

(11) **EP 3 034 465 A1**
(43) Date of publication of application: **22.06.2016**
(21) Application number: 14836779.0
(22) Date of filing: 11.08.2014
(51) Int. Cl.: C01B 21/082

(54) **COMBUSTION SYNTHESIS SYSTEM, REACTION PRODUCT, ARTICLE, COMBUSTION SYNTHESIS METHOD, POWER-GENERATING SYSTEM, PLASMA-GENERATING DEVICE, AND POWER-GENERATING DEVICE**

(30) Priority: 16.08.2013 JP 2013169126
(71) Applicant: Advanced Resources Institute Holdings LLC, Kawasaki-shi, Kanagawa 210-0007 (JP)
(72) Inventor: WATANABE, Toshiyuki, Tokyo 151-0064 (JP); KONNO, Haruki, Tokyo 160-0011 (JP); MATSUSHITA, Akiko, Kawasaki-shi Kanagawa 216-0015 (JP)
(74) Representative: Schröer, Gernot H.
(86) International application number: PCT/JP2014/071238
(87) International publication number: WO 2015/022947

(57) **Abstract**

A self-propagating high-temperature synthesis system (100) is equipped with: a supply section (1) in which a particle powder containing Si is mixed with a particle powder containing SiO₂ and a N₂ gas to produce a mixture; a reaction section (2) which has heat resistance and pressure resistance, and in which self-propagating high-temperature synthesis using, as a raw material, the mixture supplied from the supply section (1) proceeds; an ignition section (7) which can ignite the mixture supplied to the reaction section (2); and a heat extraction section (8) in which a reaction heat of the self-propagating high-temperature synthesis reaction in the inside of the reaction section (2) is removed to the outside of the reaction section (2).

## Description

### [TECHNICAL FIELD]

The present invention relates to a self-propagating high-temperature synthesis system, a reaction product, an article, and a self-propagating high-temperature synthesis method, and, more particularly, to a self-propagating high-temperature synthesis system, a reaction product, an article, and a self-propagating high-temperature synthesis method in which particle powder containing Si, particle powder containing SiO₂, and an N₂ gas are used. The invention also relates to an electric power generation system, a plasma generation device, and a power generation device.

### [BACKGROUND ART]

Electric power consumed in the entire world in industry, transportation, and consumer life amounted to 1.36×10¹⁶ Wh in 2010. Manufacture of primary industrial materials occupies about 30% of the total consumption. In particular, manufacture of special steel that contains iron as a main component occupies about 8%. As a source of energy, fossil fuels still occupy a high proportion of about 85%. No fundamental measures for ending excessive dependence on fossil fuels have been identified.

Iron based civilization that has continued steadily since the Industrial Revolution has invited imminent depletion of certain resources and is viewed as one of the causes for global warming. Silicon (hereinafter, also referred to as metal silicon, metal Si, or, simply, Si) has been focused as a material that can potentially replace iron. Si occupies 27% of the whole elements in the Earth's crust but remains substantially unexploited. Development of technologies to use Si has only begun.

Several methods have been developed to obtain useful materials from Si. For example, a self-propagating high-temperature synthesis method (hereinafter, also referred to as combustion synthesis for brevity) is known as a method to cause metal Si to react in a chamber in a nitrogen atmosphere so as to obtain silicon oxynitride-based ceramics. Studies have been made on commercial controlled self-propagating high-temperature synthesis devices for initiating silicon-oxygen-nitrogen-based combustion synthesis in a stable manner by controlling the internal pressure and temperature in the reaction system during self-propagating high-temperature synthesis. Silicon-oxygen-nitrogen-based combustion synthesis refers to self-propagating high-temperature synthesis in which solid Si, an oxygen supplying source such as SiO₂ etc., and an N₂ gas are used as source materials. Controlled self-propagating high-temperature synthesis refers to self-propagating high-temperature synthesis in which reaction heat is inhibited as much as possible by controlling the internal pressure and temperature. Silicon oxynitride-based ceramics manufactured by a controlled self-propagating high-temperature synthesis device, such as Si_{6-z}Al_{z}O_{z}N_{8-z} (hereinafter, also referred to as Sialon(s)) and Al-free SiON (hereinafter, also referred to as Sion(s)), are called silicon alloy for which studies are made on applications. In particular, an increasing number of controlled self-propagating high-temperature synthesis devices capable of synthesizing Sialon-based ceramics in a stable manner by controlling the pressure and temperature during self-propagating high-temperature synthesis are available on a commercial basis.

In comparison with the related art, one of the characteristics of controlled self-propagating high-temperature synthesis is its capability to produce silicon oxynitride-based ceramics in a stable manner without substantial energy cost. Several silicon oxynitride-based ceramics exhibiting industrially useful characteristics are produced by using controlled self-propagating high-temperature synthesis devices (non-patent documents 1, 2).

[non-patent document 1]
   K. H. Jack, Journal Material Science Vol.11 (1976) pp1135
[non-patent document 2]
   Yuwanwen Wo et al., Journal of Materials Synthesis and Processing Vol.4, No.3, (1996) pp137

### [PROBLEM TO BE SOLVED BY THE INVENTION]

Self-propagating high-temperature synthesis generally proceeds in an explosive manner so that a large amount of energy is generated in association with the reaction. Energy generated when silicon is burned in a nitrogen atmosphere is measured in O' Sialon synthesis. Spark ignition during a short period of time for inducing a reaction allows an exothermal reaction to proceed as given by expression 1 below without requiring introducing of external energy.

3Si+SiO₂+2N₂->2Si₂N₂O(ΔH⁰=-984.6 kJmol⁻¹) ... (1)

The enthalpy ΔH⁰ here indicates the total amount of heat generated from the source materials per 1 mol of reaction system or generation system. Translating the value into the electric energy per unit mass of reaction system or generation system material, we obtain 1.36 kWh/kg. Stated otherwise, 1.36 kWh of electric power is generated by nitrogen self-propagating high-temperature synthesis of source materials in an exothermal reaction in the reaction system or generation system.

Similarly, the enthalpy ΔH⁰ related to the production of βSialon (z=3) is calculated according to expression 2 below.

3Si+6Al+3SiO₂+5N₂->2Si₃N₄AlNAl₂O₃ (ΔH⁰=-973.6 kJmol⁻¹) ... (2)

Translating 1157 kcal of heat per 1 kg of the reaction product (in this case, Si₃N₄AlNAl₂O₃) generated in the process into electric power, we obtain 1.4 kWh.

SiO₂ used in the reaction of expressions 1 and 2 is from silica stones, which is a main component in the desert sand available in an unlimited amount on earth. Si is obtained by reducing SiO₂. Nitrogen is available in an unlimited amount from compressed air. In other words, source materials used in self-propagating high-temperature synthesis are none other than fundamental resources available in abundance on earth. Further, it is important to note that carbon dioxide CO₂ is not generated in self-propagating high-temperature synthesis as shown in expressions 1 and 2.

A large amount of heat is generated in self-propagating high-temperature synthesis. Therefore, studies made on related-art controlled self-propagating high-temperature synthesis devices have been directed to inhibiting an explosive self-propagating high-temperature synthesis reaction as much as possible by using 1) ambient pressure, 2) self-propagating high-temperature synthesis temperature, and 3) reaction inhibitor. Stated other words, the focus of the related-art self-propagating high-temperature synthesis devices has been on inhibiting the reaction heat generated in self-propagating high-temperature synthesis as much as possible and initiating the reaction in self-propagating high-temperature synthesis in a stable manner by fully exploiting the inhibiting capabilities of 1)-3), thereby manufacturing reaction products that should serve as basic materials for industrial products on an industrial scale and in a stable manner.

In the related-art self-propagating high-temperature synthesis method in which a batch-type device is used, the focus has been only on obtaining the reaction product. Accordingly, there is room for improvement in use efficiency of self-propagating high-temperature synthesis.

The present invention addresses these issues and a purpose thereof is to use the reaction heat generated in self-propagating high-temperature synthesis effectively.

### [MEANS TO SOLVE THE PROBLEM]

A self-propagating high-temperature synthesis system that addresses the above issue includes: a supplying unit that produces a composite by mixing particle powder containing Si, particle powder containing SiO₂, and an N₂ gas; a reaction unit having heat resistance and pressure resistance in which self-propagating high-temperature synthesis that uses the composite supplied from the supplying unit as a source material proceeds; an ignition unit that ignites the composite supplied to the reaction unit; and a heat collection unit that takes reaction heat from a self-propagating high-temperature synthesis reaction in the reaction unit out of the reaction unit.

According to this embodiment, use efficiency of self-propagating high-temperature synthesis can be increased by using the reaction heat produced in the reaction effectively. The embodiment also allows source materials to be supplied continuously via the supplying unit and allows the reaction to proceed continuously in the reaction unit.

In the self-propagating high-temperature synthesis system according to the above embodiment, the supplying unit may mix the particle powder containing Si and SiO₂ and the N₂ gas by using a fluidized bed. According to this embodiment, mixture of source materials and self-propagating high-temperature synthesis are allowed to proceed continuously and efficiently.

In the self-propagating high-temperature synthesis system according to the above embodiment, the heat collection unit takes out the reaction heat from the self-propagating high-temperature synthesis reaction by exchanging heat with water as a heat medium. According to this embodiment, the reaction heat can be taken out from the self-propagating high-temperature synthesis system continuously and efficiently.

The self-propagating high-temperature synthesis system according to the above embodiment may further include: a retrieval unit that retrieves a reaction product, containing silicon oxynitride-based ceramics, outside the reaction unit. In addition to the benefit of using the reaction heat produced in the reaction effectively, the embodiment allows the reaction product produced as a result of the self-propagating high-temperature synthesis to be retrieved efficiently.

In the self-propagating high-temperature synthesis system according to the above embodiment, the retrieval unit may maintain an interior of the retrieval unit at a pressure lower than an interior of the reaction unit and expand and cool a gas containing the reaction product. According to this embodiment, the purity of the reaction product, namely, silicon oxynitride-based ceramics, is increased and the size thereof is reduced. By using the retrieval unit to maintain an interior of the retrieval unit at a pressure lower than an interior of the reaction unit and expand and cool a gas containing the reaction product, the reaction product can be retrieved as particle powder. This can eliminate a pulverization step that is necessary in the related art. By increasing the internal pressure difference between the reaction unit and the retrieval unit to increase the depressurization and expansion effect further, the particle size of silicon oxynitride-based ceramics can be regulated and inexpensive production of ultramicro powder can be realized.

In the self-propagating high-temperature synthesis system according to the above embodiment, the particle powder containing SiO₂ may be sand, which is available in a desert in a substantially unlimited amount. According to this embodiment, alternative energy can be produced inexpensively from fossil resources without creating any concern for depletion of resources.

In the self-propagating high-temperature synthesis system according to the above embodiment, the supplying unit may produce the composite by further mixing Al. According to this embodiment, Sialon can be produced as the reaction product.

Another embodiment of the present invention relates to a reaction product. The reaction product contains silicon oxynitride-based ceramics produced by the self-propagating high-temperature synthesis system according to the above embodiment. According to this embodiment, a highly purified reaction product can be obtained.

Still another embodiment of the present invention relates to an article. The article is formed by using the reaction product according to the above embodiment. According to this embodiment, articles that are excellent in strength under normal to high temperature, resistance to thermal shock, resistance to abrasion can be formed.

Still another embodiment of the present invention relates to a self-propagating high-temperature synthesis method. The self-propagating high-temperature synthesis method includes: producing a composite by mixing particle powder containing Si, particle powder containing SiO₂, and an N₂ gas(and sometimes particle powder containing Al etc.); initiating a reaction by using a reaction unit having heat resistance and pressure resistance in which self-propagating high-temperature synthesis that uses the composite supplied as a source material proceeds; igniting the composite accommodated in the reaction unit; and taking reaction heat from a self-propagating high-temperature synthesis reaction in the reaction unit out of the reaction unit. According to this embodiment, the efficiency of using reaction heat from self-propagating high-temperature synthesis can be increased.

The self-propagating high-temperature synthesis method according to the above embodiment may further include retrieving a reaction product containing silicon oxynitride-based ceramics outside the reaction unit. In addition to the benefit of using the reaction heat produced in the reaction effectively, the embodiment allows the reaction product produced as a result of the self-propagating high-temperature synthesis to be retrieved efficiently.

Still another embodiment of the present invention relates to an electric power generation system. The electric power generation system includes: a reaction unit supplied with a composite produced by mixing particle powder containing Si, particle powder containing SiO₂, and an N₂ gas and allowing self-propagating high-temperature synthesis that uses the composite as a source material to proceed inside; a controller that regulates an amount of the N₂ gas supplied to the reaction unit so that a pressure in the reaction unit is 0.9 GPa or higher and turns a reaction gas produced in the self-propagating high-temperature synthesis into a thermal plasma; a depressurization unit in which a pressure is lower than a pressure in the reaction unit and a temperature is higher than a sublimation temperature of the reaction gas; a power generation unit that communicates an interior of the reaction unit with an interior of the depressurization unit, causes the reaction gas turned into a thermal plasma to flow from the reaction unit to the depressurization unit, and performs MHD power generation by the flow; and an adiabatic expansion chamber that communicates with the depressurization unit and receives a flow of the reaction gas in the depressurization unit to form a solid reaction product, a temperature in the adiabatic expansion chamber being lower than a sublimation temperature of the reaction gas.

Still another embodiment of the present invention relates to a plasma generation device. The plasma generation device includes a reaction unit supplied with a composite produced by mixing particle powder containing Si, particle powder containing SiO₂, and an N₂ gas and allowing self-propagating high-temperature synthesis that uses the composite as a source material to proceed inside; and a controller that regulates an amount of supply of the N₂ gas supplied to the reaction so that a pressure in the reaction unit is 0.9 GPa or higher and turns a reaction gas produced in the self-propagating high-temperature synthesis into a thermal plasma.

Still another embodiment of the present invention relates to an electric power generation device. The electric power generation device includes the plasma generation device according to the above embodiment; and a power generation unit that performs MHD power generation by causing the reaction gas produced in the plasma generation device and turned into a thermal plasma to flow.

### [ADVANTAGE OF THE INVENTION]

Reaction heat produced in self-propagating high-temperature synthesis can be used effectively.

### [BRIEF DESCRIPTION OF THE DRAWINGS]

Fig. 1 is a schematic diagram showing the open-type self-propagating high-temperature synthesis system according to the first embodiment;
Fig. 2 shows a state of a self-propagating high-temperature synthesis flame;
Fig. 3 shows a state of a self-propagating high-temperature synthesis flame;
Fig. 4 shows the relationship between the combustion temperature in the reactor and the absolute pressure; and
Fig. 5 shows a schematic configuration of the power generation system according to the second embodiment.

### [MODE FOR CARRYING OUT THE INVENTION]

A description will be given of embodiments of the present invention with reference to the drawings.

### (First embodiment)

In the related art, the following possibilities of silicon-oxygen-nitrogen-based self-propagating high-temperature synthesis have been suggested.
1) Silicon oxynitride-based ceramics produced as a reaction product can replace special steel that contains iron as a main component.
2) There is room for further significant reduction in the cost of manufacturing silicon oxynitride-based ceramics by controlling a self-propagating high-temperature synthesis reaction.

In addition to the possibilities above, the inventors identified the following possibilities. 3) Silicon-oxygen-nitrogen-based self-propagating high-temperature synthesis in which silica stones, which contains SiO₂ as a main component, and metal silicon are used as main source materials is not only capable of making the reaction product available for use but also producing a new source of energy.

In this background, the inventors have repeatedly conducted experiments and made studies by using controlled self-propagating high-temperature synthesis devices and arrived at an open-type continuous self-propagating high-temperature synthesis system. In this specification, "open-type" self-propagating high-temperature synthesis means self-propagating high-temperature synthesis directed to exploiting the resultant reaction heat as much as possible for external use without inhibiting the reaction heat as described above and unlike the related-art controlled self-propagating high-temperature synthesis. "Continuous self-propagating high-temperature synthesis" refers to self-propagating high-temperature synthesis in which source materials are introduced continuously for a continuous reaction.

The features of an open-type continuous self-propagating high-temperature synthesis system 100 according to the embodiment are as follows.
1) Continuous self-propagating high-temperature synthesis is enabled by optimizing a self-propagating high-temperature synthesis reactor (reaction unit) and steps before and after the reaction.
2) The reaction heat generated during self-propagating high-temperature synthesis is efficiently retrieved outside and used as electric energy.
3) When necessary, the reaction product is directly retrieved as fine powder from the post self-propagating high-temperature synthesis gas. This process produces high-purity particles that do not substantially contain impurities that were contained in source materials.
4) Fossil fuel based energy generation according to the related art utilizes energy generated in the process of using oxygen to oxidize organic bodies containing carbon as a main component. Therefore, carbon dioxide and carbon monoxide (gas) are inherently generated. In the self-propagating high-temperature synthesis system 100, however, the product produced in the process of generating energy is comprised of silicon, nitrogen, and oxygen so that carbon dioxide and carbon monoxide (gas) are not generated at all.

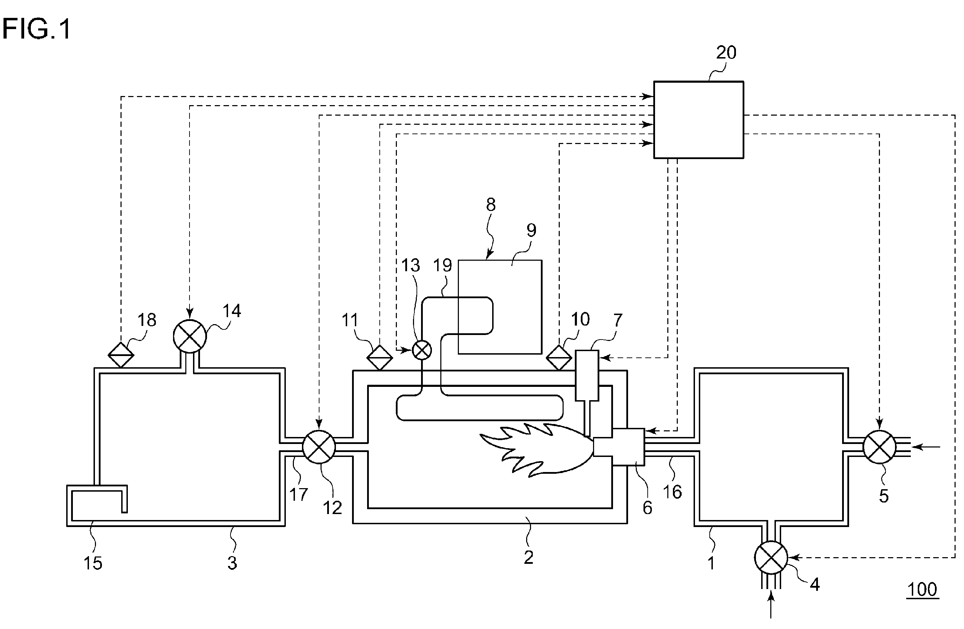

Fig. 1 is a schematic diagram showing the open-type self-propagating high-temperature synthesis system 100 according to the embodiment. The self-propagating high-temperature synthesis system 100 primarily includes a supplying unit 1, a reaction unit 2, an ignition unit 7, a heat collection unit 8, and a retrieval unit 3. Continuous self-propagating high-temperature synthesis using these components is controlled by a controller 20. The components will be described below in sequence.

The supplying unit 1 produces a composite by mixing source materials, which include particle powder containing Si, particle powder containing SiO₂, and an N₂ gas. In other words, the supplying unit 1 functions as a device to supply source materials to the reaction unit 2 in addition to uniformly mixing these source materials. The supplying unit 1 is provided with a powder source supply inlet 5 and a carrier gas supply inlet 4 each equipped with a control valve. Source materials in powder (particle powder) form are supplied from the powder source supply inlet 5 to the supplying unit 1 and a nitrogen gas (N₂) as a carrier gas is supplied from the carrier gas supply inlet 4 to the supplying unit 1. The controller 20 controls the amount of supply of source materials from the powder source supply inlet 5 and the amount of supply of the nitrogen gas (N₂) from the carrier gas supply inlet 4. This allows the powder sources supplied from the powder source supply inlet 5 to be mixed at a proportion necessary for a desired reaction.

For the purpose of mixing the powder uniformly in a short period of time, it is preferable that the supplying unit 1 be provided with a fluidized bed in which a nitrogen gas is used as a carrier gas. The fluidized bed may be in a horizontal orientation or a vertical orientation. Hereinafter, the powder source supply inlet 5, the carrier gas supply inlet 4, an injection nozzle 6, and a fluidized bed (not shown) may be collectively referred to as the supplying unit 1.

In the related-art fluidized bed power generation, pulverized coal and air are uniformly mixed in a fluidized bed and ignited in the fluidized bed. Meanwhile, accurate regulation of the composition of the reaction product carries weight in the embodiment. Therefore, the fluidized bed included in the supplying unit 1 of the embodiment is directed to uniformly mixing source materials.

Metal silicon (Si) powder and metal aluminum (Al) powder can be used as source materials for self-propagating high-temperature synthesis reaction, and powder of silica stones containing SiO₂ as a main component can be used as an oxygen supply source. The sand of a desert may be suitably used as silica stones. Alumina (Al₂O₃) powder can be used in addition to SiO₂. Expression 1 above indicates an exemplary reaction in which SiO₂ is added as an oxygen supply source and Al is not added. Meanwhile, expression 2 above indicates an exemplary reaction in which SiO₂ is added as an oxygen supply source and Al is added. A metallic alloy element or a metal oxide may further be added as necessary as source materials. The composition ratio of the powder may be regulated as appropriate in accordance with the target reaction product, by using the controller 20 to regulate the open/closed state of the powder source supply inlet 5 and the carrier gas supply inlet 4.

The solid powder uniformly mixed via the nitrogen gas and floating in the gas is supplied to the reaction unit 2 via a gas supply inlet 16 and the injection nozzle 6. The controller 20 controls the injection from the injection nozzle 6. It is preferable that the injection nozzle 6 be a pulverized coal burner. Further, the injection nozzle 6 is provided with a backfire prevention mechanism.

The reaction unit 2 has heat resistance and pressure resistance. Self-propagating high-temperature synthesis that uses the composite supplied from the supplying unit 1 proceeds in the reaction unit 2. In other words, the reaction unit 2 functions as a self-propagating high-temperature synthesis reactor in which the source materials supplied from the supplying unit 1 are subject to self-propagating high-temperature synthesis inside. The reaction unit 2 is provided with the ignition unit 7 for igniting a mixture gas. The ignition unit 7 ignites the composite supplied to the reaction unit 2. The controller 20 controls the ignition of the composite accommodated in the reaction unit by the ignition unit 7 by high-voltage arc discharge at the tip of the injection nozzle 6. Further, the controller 20 optimizes the amount of supply of the nitrogen gas from the carrier gas supply inlet 4 to the reaction unit 2 and establishes a condition whereby a self-propagating high-temperature synthesis flame is continuously produced inside the reaction unit 2.

A temperature measurement unit 10 measures the temperature in the reaction unit 2. An internal pressure measurement unit 11 measures the internal pressure in the reaction unit 2. Measurements of the temperature and internal pressure are sent to the controller 20. Self-propagating high-temperature synthesis proceeds in an extremely short period of time so that the temperature and internal pressure in the reaction unit 2 change in a short period of time. Therefore, it is important to monitor the values of temperature and internal pressure and regulate the amount of supply of the source materials in powder (particle powder) form from the powder source supply inlet 5 and the amount of supply of the nitrogen (N₂) carrier gas from the carrier gas supply inlet 4 for the purpose of maintaining self-propagating high-temperature synthesis continuously and in a stable manner. The controller 20 controls an internal pressure regulation valve 12 to open when the internal pressure in the reaction unit 2 exceeds 1.0 megapascal (MP). It is preferable that the internal pressure in the reaction unit 2 be regulated in this way to be less than about 2.0 MP, and, more preferably, less than about 1.8 MP, and, still more preferably, less than about 1.6 MP. It is preferable that the temperature in the reaction unit 2 be consequently regulated to be less than about 3000°C, and, more preferably, less than about 2800°C, and, still more preferably, less than about 2600°C. It had been quite difficult to initiate self-propagating high-temperature synthesis at such a low temperature and internal pressure in controlled self-propagating high-temperature synthesis devices according to the related art. It is preferred that the temperature and internal pressure be measured at a plurality of locations in the reaction unit 2.

A gas discharge outlet 17 connects the reaction unit 2 with the retrieval unit 3. The status of connection between the reaction unit 2 and the retrieval unit 3 is regulated by opening or closing the internal pressure regulation valve 12 provided in the gas discharge outlet 17. The controller 20 opens the internal pressure regulation valve 12 when the internal pressure and temperature in the reaction unit 2 reach predetermined values.

The retrieval unit 3 retrieves the reaction product from the self-propagating high-temperature synthesis reaction, containing silicon oxynitride-based ceramics, outside the reaction unit 2. More specifically, the retrieval unit 3 is provided with an internal pressure regulation valve 14 for regulating the internal pressure in the retrieval unit 3 and an internal pressure measurement unit 18 for measuring the internal pressure. Measurements of the internal pressure are sent to the controller 20. The controller 20 regulates the internal pressure in the retrieval unit 3 to be lower than the internal pressure in the reaction unit 2 by regulating the internal pressure regulation valve 14 based on measurements of the internal pressure in the reaction unit 2 and the internal pressure in the retrieval unit 3. When the controller 20 opens the internal pressure regulation valve 12, the internal pressure difference causes the gas containing the reaction product to be introduced into the retrieval unit 3. By being introduced into the low-pressure condition in the retrieval unit 3 from the high-pressure condition in the reaction unit 2, the gas is depressurized and expanded so that the temperature of the gas drops abruptly. In association with this, the reaction product contained in the gas is crystallized as fine crystals. The size of crystals can be regulated by using the controller 20 to control the internal pressure difference (ΔP) between the internal pressure (Pr) in the reaction unit 2 and the internal pressure (Pf) in the retrieval unit 3. It is preferable that ΔP be not less than about 0.6 MP, and, more preferably, not less than about 0.8 MP, and, still more preferably, not less than about 1.0 MP. By regulating ΔP in such a range, the average particle size of the reaction product (arithmetic average value of particle diameters: JISZ8901) can be regulated to be about 0.3-0.5 µm.

The reaction product is ultimately retrieved as powder by a collection unit 15 connected to the retrieval unit 3. The collection unit 15 is a continuous powder discharge device for discharging and collecting the powder continuously. The powder may be used to manufacture various articles (industrial products). The articles manufactured may include but are not limited to positioning members of different types, casting machine components, and ball bearings.

The heat collection unit 8 is connected to the reaction unit 2. The heat collection unit 8 includes a power generation unit 9 (steam turbine for thermal power generation) and a heat exchanger 19. The heat exchanger 19 takes the reaction heat from the self-propagating high-temperature synthesis reaction in the reaction unit 2 out of the reaction unit 2. In this case, the heat exchanger 19 exchanges the thermal energy generated in the reaction unit 2, using water as a heat medium. The controller 20 supplies the overheated steam maintained within a constant temperature range to the heat exchanger 19 by controlling a water quantity regulation valve 13. In the power generation unit 9, the heat collection unit 8 collects the heat from the water in the heat exchanger 19. Instead of turning the generated thermal energy into electric power via the steam turbine for thermal power generation, the thermal energy may be collected by electrification by a thermoelectric device (Peltier device) or using MHD power generation.

In accordance with the self-propagating high-temperature synthesis system 100 according to the embodiment, the efficiency of using reaction heat from self-propagating high-temperature synthesis can be increased by using the reaction heat generated in the reaction effectively. It is also possible to supply source materials continuously via the supplying unit 1 or allow a reaction to proceed continuously in the reaction unit 2.

Since the need to inhibit the production heat is eliminated, the configuration of the reaction unit 2 can be simplified. Also, the purity of the reaction product, namely, silicon oxynitride-based ceramics, is increased and the size thereof is reduced by using the retrieval unit 3 according to the embodiment. By maintaining the interior of the retrieval unit 3 at a lower pressure than the reaction unit 2 so as to expand and cool the gas containing the reaction product, the reaction product can be retrieved as particle powder. This can eliminate the pulverization step required in the related art. By increasing the internal pressure difference between the reaction unit 2 and the retrieval unit 3 to increase the depressurization and expansion effect further, the particle size of silicon oxynitride-based ceramics can be regulated and inexpensive production of ultramicro powder can be realized.

By using, as source materials for self-propagating high-temperature synthesis, silica stones (SiO₂) available in abundance in a desert or metal silicon (Si) that can be easily manufactured from silica stones, alternative energy can be produced inexpensively from fossil resources without creating any concern for depletion of resources.

Since the supplying unit 1 includes a fluidized bed, mixture of source materials and self-propagating high-temperature synthesis can proceed efficiently. By collecting the reaction heat, using the heat collection unit to exchange heat with water as a heat medium, the production heat can be collected from the self-propagating high-temperature synthesis system efficiently. By additionally mixing Al as a source material, Sialon can be produced as the reaction product.

The reaction product contains silicon oxynitride-based ceramics retrieved by the retrieval unit of the self-propagating high-temperature synthesis system 100. Thus, a highly purified reaction product can be obtained. By using the reaction product from the self-propagating high-temperature synthesis reaction, articles that are excellent in strength under normal and high temperature, resistance to thermal shock, resistance to abrasion can be formed.

### (Usefulness)

According to the statistics of year 2010, 1.36×10¹⁶ Wh of electric energy is consumed in the world. Based on a result of preliminary calculation using expression 2 above, 1.4 kWh of electric power can be generated per 1 kg of reaction product, by using SiO₂, which is a main component of the sand in a desert, metal silicon, etc., as novel sources of energy in self-propagating high-temperature synthesis. Providing that the efficiency is 100%, the reaction heat corresponding to the total amount of electric energy indicated above can be generated by synthesizing 10 billion tons of reaction product by using the self-propagating high-temperature synthesis system 100.

It is believed that the sand available on earth is sufficient to synthesize the reaction product of this amount so that there should be no worries over depletion. It should also be noted that Si is inexpensive. It is envisioned that the sand in a desert, hitherto considered as useless resources, is exploited both as an industrial material and a source of energy, by running the self-propagating high-temperature synthesis system 100 continuously and initiating silicon oxynitride-based ceramics self-propagating high-temperature synthesis for retrieving energy and products from the reaction. By introducing self-propagating high-temperature synthesis of SiO₂ and silicon, which are main components of the sand in a desert, the sand in a desert will hold magnificent possibilities as a novel source of energy that could replace fossil fuels.

The concern for depletion of iron ores as a resource to produce steel has become more serious year by year. In this background, silicon oxynitride-based ceramics produced in a reaction of self-propagating high-temperature synthesis of silicon (SiO₂ and Si), which is estimated to be available on earth in an amount five times as large as iron, could possibly replace steel, which is currently the most important general-purpose industrial material, and provide for an industrial material for building the next generation infrastructure. Silicon oxynitride-based ceramics is also very promising due to its possibility to replace rare metals that are also likely to be depleted like iron. In particular, countries with a desert are expected to practice the self-propagating high-temperature synthesis system according to the embodiment seriously as a national project. Use of purified Al and Si as source materials is also yields positive energy balance.

### (Examples)

### 1. Source materials

The composition of metal silicon used in the examples is shown in Table 1. The metal silicon used is a Chinese grade 553 material. Analysis of Al, Fe, Zr, Ca, and Mg was conducted by using the ICP method. Analysis of oxygen was conducted by using the melting method. The value for Si represents the residue (calculated value). In Examples 1-7 of Tables 3 and 4, average particle sizes (arithmetic average value of particle diameters: JISZ8901) of 10 µm, 100 µm, and 200 µm are used.

**[Table 1]**

| Si | Al | Fe | Zr | Ca | Mg | O |
|---|---|---|---|---|---|---|
| 98.106 | 0.26 | 0.4 | 0.002 | 0.1 | 0.12 | 1.12 |

Table 2 shows analytical values of the composition of the desert sand used as SiO₂ sampled at three sites in Aswan Desert (Egypt). SiO₂ is represented in % and the other materials are represented in PPM. In each example, samples from sites 1-3 are mixed in equal amounts. In Examples 1-7 of Tables 3 and 4, average particle sizes of 10 µm, 100 µm, and 200 µm are used.

**[Table 2]**

| SITES | SiO₂ | K₂O | Na₂O | MgO | CaO | Fe₂O₃ | Al₂O₃ | TiO₂ |
|---|---|---|---|---|---|---|---|---|
| 1 | 99.847 | 15 | 25 | 15 | 120 | 53 | 69 | 1200 |
| 2 | 99.82 | 9 | 32 | 4 | 46 | 20 | 49 | 1600 |
| 3 | 99.86 | 15 | 31 | 7 | 5 | 15 | 100 | 1200 |

### 2. Test method

A test was conducted by using the self-propagating high-temperature synthesis system 100 shown in Fig. 1. The self-propagating high-temperature synthesis system 100 has the function uniformizing source materials, using a nitrogen gas as a carrier gas in the fluidized bed system. The gravity sorting capability provided by the nitrogen gas is expected to remove impurities in solid source materials. Solid source materials in variable particle sizes are provided to the system in order to confirm the advantages.

### 3. Test results

The test results are shown in Table 3 and Table 4. Table 3 shows the compounding ratio of the source materials used. Table 4 shows the operating conditions of the self-propagating high-temperature synthesis system 100. The values for the components in the tables indicate the compounding ratio (mass ratio) of the source materials occurring when the source materials are mixed uniformly in the supplying unit 1 and so indicates the compounding ratio of the source materials supplied to the reaction unit 2 per minute. The value "3" for Z in Table 3 indicates a series of examples in which the components are mixed to produce silicon oxynitride-based ceramics Si_{6-z}Al_{z}O_{z}N_{s-z}, wherein Z=3, as a reaction product of self-propagating high-temperature synthesis, and "1" indicates a series of examples in which the components are mixed such that Z=1. It should further be noted that 1 gr (grain)=about 0.064 g. "Water vapor" in Table 4 represents the temperature of water vapor in the heat collection unit 8,

**[Table 3]**

| EXAMPLES | VALUE OF Z | METAL SILICON(gr) | | | SiO₂(gr) | | | Al (gr) | N₂ (L) |
|---|---|---|---|---|---|---|---|---|---|
| | | PARTICLE SIZE(µm) | | | PARTICLE SIZE(µm) | | | | |
| | | 10 | 100 | 200 | 10 | 100 | 200 | | |
| 1 | 3 | 84 | | | 180 | | | 162 | 112 |
| 2 | 3 | 84 | | | 180 | | | 162 | 200 |
| 3 | 3 | | 84 | | | 180 | | 162 | 112 |
| 4 | 3 | | | 84 | | | 180 | 162 | 112 |
| 5 | 1 | 126 | | | 30 | | | 27 | 78.4 |
| 6 | 1 | | 126 | | | 30 | | 27 | 78.4 |
| 7 | 1 | | | 126 | | | 30 | 27 | 78.4 |

**[Table 4]**

| EXAMPLES | VALUE OF Z | REACTION UNIT 2 | | WATER VAPOR (°C) | RETRIEVAL UNIT 3 | REACTION PRODUCT | | |
|---|---|---|---|---|---|---|---|---|
| | | TEMPERATURE (°C) | INTERNAL PRESSURE (MP) | | INTERNAL PRESSURE (MP) | PARTICLE SIZE (µm) | XRD IDENTIFICATION | Fe ANALYSIS (UNIT) |
| 1 | 3 | 2500 | 1.2 | 850 | 0.1 | 0.4 | Z=3 | 0.01 |
| 2 | 3 | 2500 | 1.3 | 870 | 0.01 | 0.3 | Z=3 | 0.01 |
| 3 | 3 | 2400 | 1.3 | 870 | 0.1 | 0.6 | Z=3 | 0.03 |
| 4 | 3 | 2400 | 1.3 | 860 | 0.1 | 0.5 | Z=3 | 0.04 |
| 5 | 1 | 2000 | 1.1 | 850 | 0.1 | 0.5 | Z=1 | 0.01 |
| 6 | 1 | 2100 | 1.2 | 860 | 0.1 | 0.4 | Z=1 | 0.04 |
| 7 | 1 | 2100 | 1.1 | 840 | 0.1 | 0.3 | Z=1 | 0.04 |

It was found from the results in Examples 1 and 2 that once the values defining the composition are determined for solid components, the amount of nitrogen is automatically determined. In these examples, 112 liter (L) of nitrogen was neither excessive nor insufficient for the reaction to proceed (Example 1). The reaction products produced are unchanged by adding 200 L (excessive amount) of nitrogen gas (Example 2). This is quite a unique characteristic of a self-propagating high-temperature synthesis reaction. It was simultaneously confirmed that self-propagating high-temperature synthesis is a reaction that is quite easy to work with.

Using the self-propagating high-temperature synthesis system 100, it was extremely easy to initiate ignition in the reaction unit 2 by using the ignition unit 7 after the source materials are mixed uniformly by using the supplying unit 1 and concurrently with the supply of the source materials from the supplying unit 1 to the reaction unit 2. Immediately upon ignition, the flame associated with the self-propagating high-temperature synthesis reaction expanded explosively in the reaction unit 2. In association with this, the internal pressure in the reaction unit 2 is rapidly increased to about 1.2 MP. In Examples 1-4, where Z=3, the temperature in the reaction unit 2 is rapidly increased to about 2400°C. In Examples 5-7, where Z=1, the temperature is rapidly increased to about 2000°C. It was confirmed that the reaction unit 2 can be operated in a stable manner at less than about 3000°C and about 2.0 MP.

The internal pressure regulation valve 12 was opened when the internal pressure in the reaction unit 2 exceeded 1 MP. The retrieval unit 3 regulates the internal pressure at a normal pressure of 0.1 MP by using the internal pressure regulation valve 14 and the internal pressure measurement unit 18. The post self-propagating high-temperature synthesis gas was discharged from the reaction unit 2 to the retrieval unit 3 via the gas discharge outlet 17 in accordance with the internal pressure difference (ΔP) between the reaction unit 2 and the retrieval unit 3. As a result the reaction product was retrieved in the collection unit 15.

The average particle size of the reaction product retrieved was about 5 µm. An XRD identification revealed that silicon oxynitride-based ceramics having the targeted composition (in the case of Z=3: Si₃Al₃O₃N₅) ; in the case of Z=1: Si₅Al₁O₁N₇) designated by the values defining the composition is synthesized in the self-propagating high-temperature synthesis system 100 (Table 4). It was also confirmed that iron, which is an impurity contained in the source materials (metal silicon and desert sand) is not substantially contained in the silicon oxynitride-based ceramics, the reaction product. In other words, it was demonstrated that reaction product particles that do not substantially contain iron can be produced by initiating self-propagating high-temperature synthesis using the self-propagating high-temperature synthesis system 100 and using metal silicon and sand as source materials without removing iron therefrom.

It was also confirmed that the reaction heat generated in self-propagating high-temperature synthesis can be taken out of the reaction unit 2 easily by the heat collection unit 8, a reactor heat exchange device that includes a steam turbine for thermal power generation.

### (Second embodiment)

The second embodiment relates to a technology of creating a thermal plasma state in the self-propagating high-temperature synthesis reaction described above and generating electric power by using a thermal plasma. A detailed description will follow.

Energy obtained from fossil fuels is enormous and a variety of organic products are obtained from their residue. Therefore, the contemporary society is heavily dependent on fossil fuels. Heavy consumption of fossil fuels places an enormous load on the environment on earth. For several billion years since ancient times, primitive living organisms have fixed carbon dioxide and locked it deep under the ground. Humanity in the contemporary age is consuming it as a fuel and returning it to the atmosphere.

Since the Industrial Revolution, the civilization built by humanity is one that manufactures iron by reducing iron ores with carbon. Generally, 2 tons of carbon dioxide is released per 1 ton of iron produced. Currently, the amount of steel produced in the world is 1.5 billion tons so that the total of carbon dioxide released amounts to 3 billion tons per year. This represents 40% of the amount of carbon dioxide released worldwide.

The inventors have undertaken a variety of fundamental studies directed to building a silicon-nitrogen based system for energy generation and material manufacturing with an aim to departing from the current system of circulation build upon a carbon-oxygen-iron cycle. Silicon accounts for the maximum proportion of 27% in the reserves of solid resources, whereas nitrogen accounts for about 80% in atmospheric composition. The inventors have succeeded in synthesizing silicon nitrogen-based ceramics by self-propagating high-temperature synthesis using silicon and nitrogen as main resources and have found that enormous energy can be generated in the process. Carbon dioxide is not generated at all in self-propagating high-temperature synthesis and energy generation. According to the embodiment, a novel silicon-nitrogen-ceramics cycle can be built in distinction from the carbon-oxygen-iron cycle conventionally enjoyed in a rather spontaneous manner.

Through further studies on methods of controlling enormous energy generated in self-propagating high-temperature synthesis and utilizing the energy, we have identified the following directions.
(1) The temperature of a self-propagating high-temperature synthesis reaction is proportional to pressure in the system. Since the internal volume of a reactor remains constant, the self-propagating high-temperature synthesis temperature is decreased if the pressure in the reactor is decreased, and the self-propagating high-temperature synthesis temperature is increased if the pressure is increased. The pressure in the reactor can be increased from outside via a communicating pipe connected to the interior of the reactor. In this embodiment, the pressure in the reactor is controlled by using a nitrogen gas.
(2) If the pressure in the reactor is increased, the self-propagating high-temperature synthesis temperature is increased. At the reactor internal pressure of 0.9 GPa, the self-propagating high-temperature synthesis temperature reaches 1900°C or higher. At this point of time, the self-propagating high-temperature synthesis flame turns into a plasma.

Based on these findings, we have made various studies on methods of converting energy from a thermal plasma and obtaining crystalline powder with controlled particle diameter from a thermal plasma. We obtained the following knowledge as a result.
1) It is difficult to control a self-propagating high-temperature synthesis reaction at will once self-propagating high-temperature synthesis is started. A so-called "runaway reaction" occurs unless the self-propagating high-temperature synthesis reaction after ignition is subject to some control. It is therefore important to control a self-propagating high-temperature synthesis reaction by taking some measures. It is also important to maintain the status of a thermal plasma continuously for the purpose of generating electric power using a thermal plasma (e.g., for the purpose of magneto-hydro-dynamics (MHD) power generation).
2) It is common to add 50% or higher of moderator (dilution material) in order to control excessive reaction heat from being generated in self-propagating high-temperature synthesis. A ceramic, a product from the self-propagating high-temperature synthesis reaction, is used as a moderator. It is also a challenge to reduce the moderator. Use of a moderator is one factor that inhibits a continuous self-propagating high-temperature synthesis reaction. It is therefore desired to achieve a continuously running self-propagating high-temperature synthesis reaction for the purpose of continuously generating electric power by utilizing the energy generated in the self-propagating high-temperature synthesis reaction.
3) An ordinary approach employed subsequent to a self-propagating high-temperature synthesis reaction is to naturally cool the reaction product. Natural cooling results in large ceramic blocks on the order of 10-100 cm in size. The blocks are pulverized for several tens of hours in water or in an organic solvent, using a bead mill. The cost required for pulverization occupies a major portion of the cost for ceramic fine powder.
4) In crystallizing and synthesizing solid ceramics by controlling refrigeration of a gas body in a plasma environment, It is desired to configure the ceramic crystals to have a desired crystal structure and to configure the ceramic powder to have a desired particle size. Therefore, a method of controlling refrigeration of a plasma gas and a system for the method need be established in electric power generation using a thermal plasma.

Based on the above knowledge, the inventors have made thorough studies as detailed below.

### (Control of combustion in self-propagating high-temperature synthesis)

A reactor having a total volume of 8000 liter of quasi-mass production level is used to test various self-propagating high-temperature synthesis conditions as described below. As a result, we were able to gain understanding of temperature control of self-propagating high-temperature synthesis and the process of turning a self-propagating high-temperature synthesis flame into a thermal plasma flame.

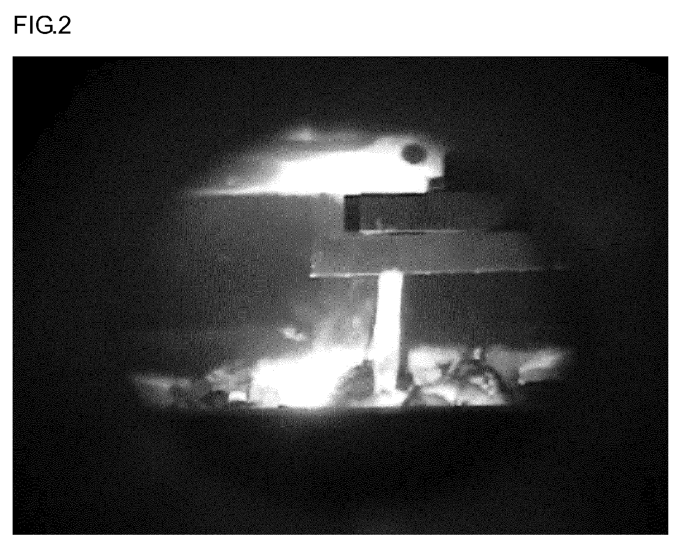

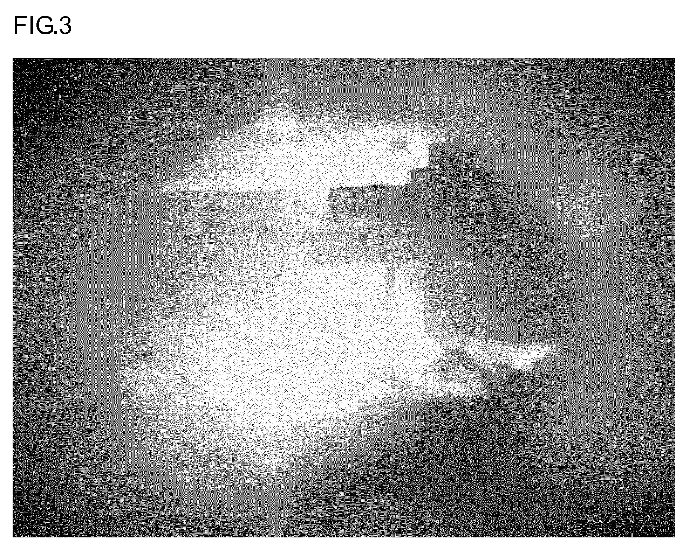

A nitrogen gas is introduced into a reactor in which a metal silicon is introduced by a distance of about 20 µm. Liquid nitrogen may be used as a source of supplying a nitrogen gas. An arc heater is used under proper conditions so as to ignite the metal silicon. Upon ignition, the nitrogen pressure is increased. As shown in Fig. 2, the initial self-propagating high-temperature synthesis flame is in a moderate state. In the state shown in Fig. 2, the pressure in the reactor is 0.7 GPa and the self-propagating high-temperature synthesis temperature is 1700°C. As the pressure of nitrogen introduced is increased, the combustion temperature is increased. When the pressure in the reactor reaches about 0.9 GPa, an extremely strong thermal plasma flame is produced as shown in Fig. 3. In the state shown in Fig. 3, the pressure in the reactor is 0.9 GPa and the combustion temperature is 1900°C.

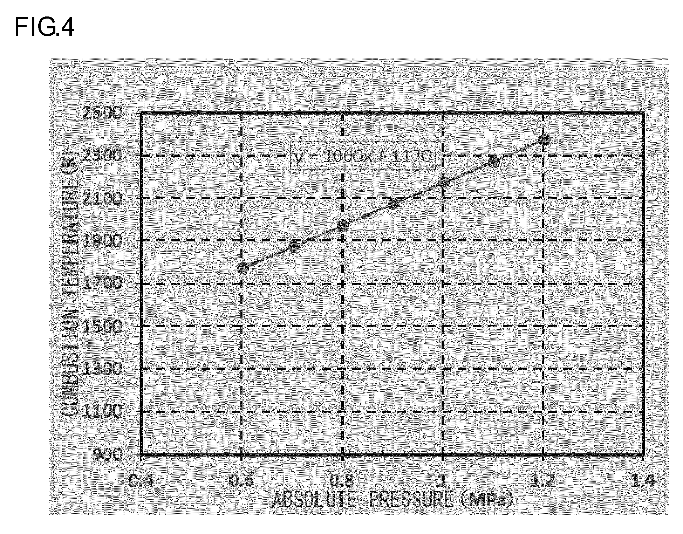

Fig. 4 shows the relationship between the combustion temperature (K) in the reactor and the pressure (absolute pressure) of the nitrogen gas introduced (MPa). As shown in Fig. 4, the temperature and the pressure are in a linear relationship. Based on the foregoing, it was confirmed that the combustion temperature in a reactor can be controlled by controlling the pressure in the reactor.

The phenomenon of generation of a thermal plasma in a self-propagating high-temperature synthesis reaction as a whole is summarized as follows.
1) The self-propagating high-temperature synthesis phenomenon in a silicon-nitrogen system is considered to be started by a large reaction heat (enthalpy) of silicon and nitrogen. It is understood that the phenomenon is exhibited according to the relationship "free energy of elemental silicon+free energy of elemental nitrogen»free energy of silicon/nitrogen compound". In a similar system, reaction heat of 984.6 KJ/mol is confirmed.
2) The subsequent reaction induced by the exothermic reaction upon the start of self-propagating high-temperature synthesis is controlled to be strictly proportional to the nitrogen pressure. This is believed to be in compliance with Boyle-Charle's law under a constant volume (reactor volume): P*V=nRT (P=pressure, V=reactor volume (constant), T=temperature). In other words, nitrogen pressure (P)->high, self-propagating high-temperature synthesis temperature (T)->high, and, nitrogen pressure (P)->low, self-propagating high-temperature synthesis temperature (T)->low. It is therefore understood that the self-propagating high-temperature synthesis temperature is controlled at will by the pressure of nitrogen introduced.
3) It was confirmed that the silicon and nitrogen gas are turned into a plasma state when the self-propagating high-temperature synthesis temperature is increased. Confirmation of generation of a thermal plasma flame in a high-temperature range is a groundbreaking discovery. It has been reported in the past that a plasma flame is generated by giving electromagnetic energy in any of a variety of forms to a gas. Engineering values of a plasma flame obtained in this process have been reported. Meanwhile, a thermal plasma is generated according to the embodiment by producing a nitrogen pressure of about 0.9 GPa or higher without adding electromagnetic energy from outside.

A uniqueness of the embodiment consists in its use of a thermal plasma flame generated by self-propagating high-temperature synthesis enthalpy in self-propagating high-temperature synthesis and by subsequent nitrogen pressure. In other words, the embodiment is directed to plasma generation assisted by a self-propagating high-temperature synthesis reaction. The technology enables generating a plasma at a cost extremely lower than the related-art plasma generation assisted by electric/magnetic energy.

It can be said that thermal energy generated in a self-propagating high-temperature synthesis reaction in a silicon-nitrogen system is of little use if the focus is on synthesis of new materials. Therefore, measures for preventing reaction heat have been sought in the related art. In contrast, the embodiment is successful in obtaining a high amount of heat generation only by using the pressure of nitrogen used in self-propagating high-temperature synthesis and achieving a plasma state as a result. This can eliminate the need for a separate device to turn a flame into a plasma or for supply of additional energy so that a plasma state can be achieved at a lower cost.

Further, the focus of earlier self-propagating high-temperature synthesis technologies has been on how to control excessive amount of heat as mentioned above, and the reaction heat has been controlled by adding a dilution material. According to the embodiment, however, a dilution material is not used. Source materials are allowed to exhibit their exothermic capability to its full potential, and the self-propagating high-temperature synthesis reaction is controlled by controlling the nitrogen pressure. It has therefore become easy to control the self-propagating high-temperature synthesis reaction characterized by its explosive nature. This has also made possible various devices and manners of control described later.

According to the embodiment, radicals and liberated electrons obtained in a thermal plasma state can be exploited for plasma power generation. Crystal control and particle size control of ceramics, the reaction product of a self-propagating high-temperature synthesis reaction, are also possible.

Hereinafter, a description will be given of how ceramics are crystallized by a sublimation reaction in a thermal plasma state, a method of producing solid ceramic powder having their particle size controlled, and electric power generation in that process.

### (Electric power generation from a thermal plasma and synthesis of ceramics (control of production of solids)

It is known that MHD power generation is designed to cause a conductive working fluid (plasma) having a temperature of about 2000-3000°C in a fluid channel in an electric power generator to which a magnetic field is applied from outside so as to generate electric power according to Faraday's law of electromagnetic induction. MHD power generation is promising as next-generation high-efficiency power generation due to the absence of a need for a movable part in the fluid channel of the power generator. The operating fluid used in MHD power generation according to the related art is formed based on a fuel gas obtained by adding air or oxygen to coal or natural gas.

According to the embodiment, MHD power generation is implemented easily by a combination with a self-propagating high-temperature synthesis plasma. A description will now be given of the power generation system according to the embodiment.

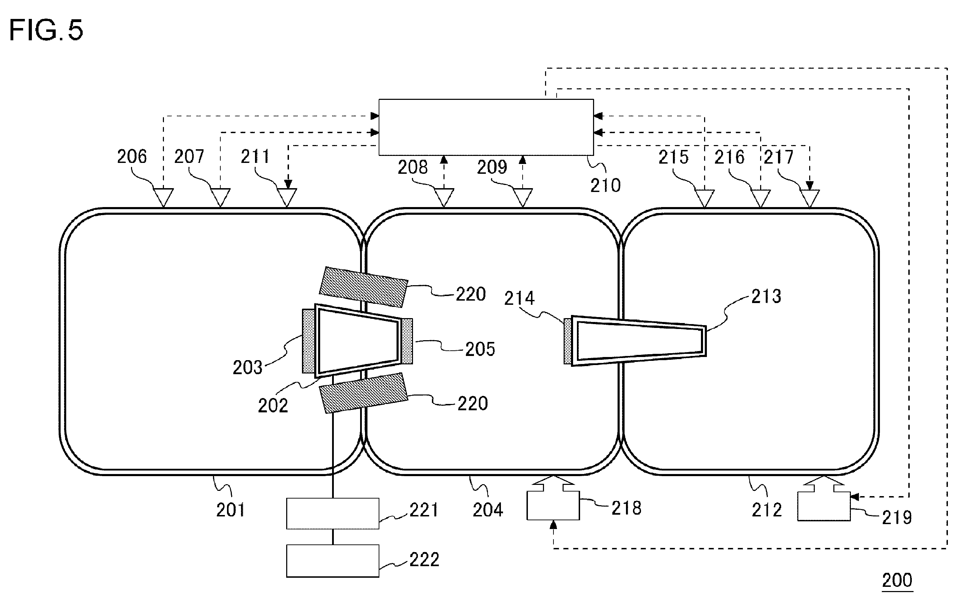

The power generation system according to the embodiment is designed to perform MHD power generation by using a thermal plasma obtained by self-propagating high-temperature synthesis and nitrogen pressurization. Fig. 5 shows a schematic configuration of the power generation system according to the embodiment. In Fig. 5, those features related to introduction of source materials, ignition, and retrieval of the reaction product are substantially identical to those of the first embodiment so that an illustration thereof is omitted.

A power generation system 200 according to the embodiment includes a reactor 201 (reaction unit), an MHD power generation device 202 (power generator), an electromagnetic valve 203, a depressurization chamber 204 (depressurization unit), a check valve 205, a pressure gauge 206, a thermometer 207, a pressure gauge 208, a thermometer 209, a controller 210, a valve position controller 211, an adiabatic expansion chamber 212, a pulverization nozzle 213, an electromagnetic valve 214, a thermometer 215, a vacuum degree measurement device 216, a valve position controller 217, a vacuum device 218, a vacuum device 219, an electromagnetic induction magnet 220, an inverter 221, and a direct current output 222.

A composite produced by mixing particle powder containing Si, particle powder containing SiO₂, and an N₂ gas is supplied to the reactor 201 so as to initiate a self-propagating high-temperature synthesis reaction in the reactor 201, using the composite as a source material. Particle powder of Al, etc. may be mixed in the composite. The self-propagating high-temperature synthesis reaction is as described in the first embodiment. The controller 210 controls the amount of supply of the N₂ gas from the carrier gas supply inlet 4 and increases the nitrogen pressure in the reactor 201 during the self-propagating high-temperature synthesis reaction. The controller 210 controls the amount of N₂ gas supplied from the carrier gas supply inlet 4 based on measurements by the pressure gauge 206 provided in the reactor 201. Accordingly, the pressure in the reactor is raised to 0.9 GPa or higher. As a result, a thermal plasma is generated in the reactor. In other words, the reaction gas produced as a result of the self-propagating high-temperature synthesis reaction is turned in to a thermal plasma.

A high flow rate is given to the thermal plasma generated in the reactor 201, i.e., the reaction gas turned into a thermal plasma. The thermal plasma passes through the MHD power generation device 202. The MHD power generation device 202 has a circular cone structure. The open end through which a thermal plasma is introduced, i.e., introduction open end, is arranged to communicate with the interior of the reactor 201. The electromagnetic valve 203 is provided in the introduction open end. By regulating the position of the electromagnetic valve 203, introduction of a thermal plasma into the MHD power generation device 202 and suspension thereof can be controlled. The other open end of the MHD power generation device 202, i.e., discharge open end, is arranged to communicate with the interior of the depressurization chamber 204 provided adjacent to the reactor 201. Therefore, the MHD power generation device 202 communicates the interior of the reactor 201 with the interior of the depressurization chamber 204. The check valve 205 is provided at the discharge open end. The check valve 205 prevents back flow of the reaction gas from the depressurization chamber 204 to the reactor 201.

The flow rate of the thermal plasma introduced into the MHD power generation device 202 is controlled by the internal pressures in the reactor 201 and the depressurization chamber 204 and the position of the electromagnetic valve 203. The pressure gauge 206 and the thermometer 207 measure the pressure and temperature in the reactor 201, and the pressure gauge 208 and the thermometer 209 measure the pressure and temperature in the depressurization chamber 204. These measurements are output to the controller 210. The vacuum device 218 is provided in the depressurization chamber 204. The controller 210 controls the vacuum device 218 based on information obtained on the pressure and maintains the pressure in the depressurization chamber 204 to be lower than the pressure in the reactor 201. Further, the controller 210 outputs a control signal to the valve position controller 211 based on the result of computation using information on the pressure and temperature. The valve position controller 211 controls the position of the electromagnetic valve 203 based on the control signal. This gives a flow rate to the thermal plasma generated in the reactor 201, allowing the thermal plasma to be introduced into the MHD power generation device 202.

The MHD power generation device 202 generates electric power by using the thermal plasma introduced. The electromagnetic induction magnet 220 applies a magnetic field in the MHD power generation device 202. An AC current obtained by generating power is taken out as the direct current output 222 via the inverter 221. In other words, a thermal plasma flow of an arbitrary flow rate is generated in the power generation system 200 by controlling the pressure in the depressurization chamber 204 communicating with the reactor 201 via the electromagnetic valve 203 that may be opened or closed. By directing the thermal plasma flow to the MHD power generation device 202 provided between the reactor 201 and the depressurization chamber 204, MHD power generation is performed. The thermal plasma passing through the MHD power generation device 202 flows into the depressurization chamber 204.

The configuration in the power generation system 200 for production of ceramic crystals and particle size control on the reaction product, which are performed subsequent to MHD power generation, is as described below.

The controller 210 maintains the temperature in the depressurization chamber 204 to be higher than the sublimation temperature of the reaction gas under the pressure in the depressurization chamber 204, based on the information obtained on the pressure and temperature to prevent the reaction gas from being sublimated and solidified in the depressurization chamber 204. For example, the temperature in the depressurization chamber 204 is maintained at 1400°C or higher. This maintains the reaction product in the depressurization chamber 204 in a gas state. The temperature in the depressurization chamber 204 can be regulated by using heat generated in the reactor 201. Temperature regulation of the gas introduced into the depressurization chamber 204, i.e., temperature regulation in the depressurization chamber 204, is primarily performed by a plasma. The higher the temperature of a reaction gas, the larger the amount of plasma generated.

The adiabatic expansion chamber 212 is provided adjacent to the depressurization chamber 204. The interior of the depressurization chamber 204 and the interior of the adiabatic expansion chamber 212 communicate with each other via the pulverization nozzle 213. The electromagnetic valve 214 is provided at the open end of the pulverization nozzle 213 toward the depressurization chamber 204. The temperature and vacuum degree in the adiabatic expansion chamber 212 are measured by the thermometer 215 and the vacuum degree measurement device 216. Measurements are output to the controller 210. The vacuum device 219 is provided in the adiabatic expansion chamber 212. The vacuum device 219 is controlled based on a control signal from the controller 210. The pressure and vacuum degree in the adiabatic expansion chamber 212 can be controlled by the vacuum device 219. The temperature in the adiabatic expansion chamber 212 is controlled to be lower than the sublimation temperature of the reaction gas under the pressure in the adiabatic expansion chamber 212. The controller 210 can maintain the temperature in the adiabatic expansion chamber 212 to be lower than the sublimation temperature by using the vacuum device 219 to regulate the pressure and/or temperature in the adiabatic expansion chamber 212. Temperature regulation in the adiabatic expansion chamber 212 can be effected by regulating the vacuum degree in the adiabatic expansion chamber 212 and thereby regulating the coefficient of conduction of heat to the interior of the adiabatic expansion chamber 212 from outside.

The controller 210 outputs a control signal to the valve position controller 217 based on the result of computation using information obtained on the temperature and vacuum degree. The valve position controller 217 controls the position of the electromagnetic valve 214 based on the control signal. When the electromagnetic valve 214 is opened, the reaction gas in the depressurization chamber 204 is introduced into the adiabatic expansion chamber 212. This causes the reaction gas introduced from the depressurization chamber 204 into the adiabatic expansion chamber 212 to be turned in to ceramics in solid particle form due to the sublimation phenomenon. In the power generation system 200, crystals are formed by natural cooling. Since the sublimation temperature of ceramics obtained can be identified, a desired crystal structure can be obtained by regulating the pressure in the adiabatic expansion chamber 212 to produce a crystallization temperature that allows formation of the desired crystal structure.

Conditions to spray a gas from the depressurization chamber 204 into the adiabatic expansion chamber 212 via the pulverization nozzle 213, and, in particular, the spray speed, can be regulated at will so that a desired particle size can be obtained. For example, sub-micron sized ceramic fine particles can be obtained. Spraying conditions can be regulated at will by, for example, regulating the internal pressure difference between the depressurization chamber 204 and the adiabatic expansion chamber 212. It should further be noted that the substances building the plasma can be retrieved entirely as ceramic fine powder after plasma electric power generation. According to the embodiment, a MHD power generation system is simplified. An added advantage is that various seed substances can be added easily at the time of self-propagating high-temperature synthesis.

As described above, the power generation system 200 according to the embodiment is not only capable of performing MHD power generation but also producing ceramics in fine powder form having a desired silicon-nitrogen based ceramic crystal state. A description will now be given of the low cost, high quality, and benefits of the ceramics obtained in this manner.

1) According to the embodiment, fine powder silicon-nitrogen ceramics regulated for crystal systems can be manufactured at a low cost by direct synthesis. In the past, Japanese national projects such as Sunshine Project and Moonlight Project were pursued for a long period of time aimed at using silicon based ceramics for all kinds of industrial structure applications including automobiles. This started a ceramic boom (silicon boom) particularly in the automobile industry. The boom triggered the evolution of research and development in ceramics in Japan. The rise of the silicon boom was a natural course of event in a country with poor metal resources.

The material primarily targeted in the development was silicon nitride of a simple structure. However, the material price was 10 yen/g so that the price of 1 yen/g targeted in the automotive industry has not been achieved. Additionally, the reliability of the material was somewhat insufficient. As a result, the focus has been shifted to the functional ceramics so that various functional (electromagnetic) ceramics have been developed. Various methods of synthesizing ceramics for structural use (structural ceramics) have been developed since but the price of 1 yen/g has not been achieved.

Through trials and errors, the inventors have found that a factor that makes the price of ceramics high is the pulverization step performed after the ceramics are synthesized. It takes a long period of time to pulverize ceramics of superhigh hardness having Vickers hardness (HV) of 1500 and a size of 10-100 cm to micron-level fine powder (e.g., less than 1 micron). Materials manufactured through such steps cannot be said to be general-purpose industrial materials. It is therefore desired that ceramics as synthesized are in the form of micro-level fine powder. It is also desired that the crystal structure of ceramics be regulated at will. According to the power generation system 200 of the embodiment, sub-micron (less than 1 micron) ceramic fine powder can be obtained. The crystal structure can be regulated at will.

In other words, the power generation system 200 allows solids to be crystallized at a desired temperature and allows sub-micron ceramic fine powder to be manufactured directly. In this way, ceramics can be manufactured at the cost of 1 yen/g or below. The above-mentioned cost can be easily achieved (source material cost+depreciation of facilities+manpower cost (=substantially 0 due to automation)).

The benefits of the power generation system 200 are as follows.

### (Benefit 1)

The ceramics according to the embodiment at a price of 1 yen/g mainly composed of silicon and nitrogen could serve as a novel all-purpose material and materialize Sunshine Project and Moonlight Project in the past. This can reduce the weight of automobiles and realizes non water cooled heat resistant engines.

### (Benefit 2)

Electric power can be generated by using silicon and nitrogen. Production of novel energy that has not been imagined before becomes possible. Neither oxygen nor carbon is used for production of energy so that generation of carbon dioxide is inhibited. Silicon is a metal that occupies 27% of the Earth's resources and is an underground resource available in a large quantity in Japan as well as in other parts of the world. Nitrogen occupies 80% of the atmosphere. Therefore, procurement of source materials is easy.

### (Benefit 3)

As the scale of production of the ceramics of the embodiment is increased, production of steel can be reduced in scale so that carbon dioxide is reduced.

Silicon-nitrogen based ceramics produced in the world amounts to 4 million - 5 million tons per year. The amount of production is trivial despite the fact that silicon and nitrogen, earth's resources available in a large quantity, are used as source materials. The amount of steel produced in the world is 1.5 billion tons. This also reveals that the amount of production of silicon-nitrogen based ceramics is small.

As described above, the reason behind this is supposed to be the manufacturing cost. The quality of silicon-nitrogen based ceramics is endorsed by the state in Sunshine Project and Moonlight Project, but it is still priced as high as 6 yen/g recently and is not currently accepted as a general-purpose material. Quantitatively, iron is the most abundantly used material in the automobile industry and is priced at 0.1 yen/g. The amount of iron used per an automobile is about 1 ton. The amount of resin, glass, copper, aluminum, etc. used is about 100 kg per an automobile, and they are priced less than 1 yen/g. The framework "general-purpose material=material used in automobiles=priced about 1 yen/g" is solidly established. It is therefore desired that the price be 1 yen/g in order to promote the sale of silicon-nitrogen based ceramics as a general-purpose material.

As mentioned above, the reason for high price of silicon-nitrogen based ceramics is that pulverization into fine powder costs high. Therefore, if ceramics in fine powder state can be manufactured, the cost of ceramics is lowered. The embodiment can achieve this goal. A detailed description will be given below with reference to an example.

### (Example)

Various tests were conducted on the production level according to a basic guideline "lower the price of ceramics=does not perform pulverization=directly synthesize fine powder". A simulation was conducted on mass production of ceramics by the manufacturing method of the embodiment for turning a reaction gas into a thermal plasm, mass production of ceramics in self-propagating high-temperature synthesis that does not involve turning a reaction gas into a thermal plasma, and mass production of ceramics by the solid-phase synthesis method according to the related art, and estimated prices of mass-produced products were calculated. The result is shown in Table 5.

**[Table 5]**

| | MATERIAL COST (YEN/g) | METHOD OF CONTROLLING COMBUSTION SYNTHESIS REACTION | ELECTRIC POWER COST AT SYNTHESIS | PULVERIZATION COST (YEN/g) | | | | OTHER COST (YEN/g) | PRICE (YEN/g) |
|---|---|---|---|---|---|---|---|---|---|
| | | | | 10cm DRY SYSTEM | 3µm DRY SYSTEM | 500nm WET SYSTEM | DRYING | | |
| POWER GENERATION/ SYNTHESIS METHOD | 0.3 | CONTROL OF NITROGEN PRESSURE | NO | - | - | - | - | 0.5 | LESS THAN 1 |
| COMBUSTION SYNTHESIS METHOD 1 | 0.3 | ADDITION OF MODERATOR | NO | - | - | - | - | 1.5 | LESS THAN 2 |
| COMBUSTION SYNTHESIS METHOD 2 | 0.3 | ADDITION OF MODERATOR | NO | 0.1 | 0.1 | 2.5 | 0.5 | 1.5 | 5 |
| RELATED-ART SOLID-PHASE SYNTHESIS | 0.3 | - | YES | - | - | - | - | - | 6 |

Referring to Table 5, "power generation/synthesis method" denotes the manufacturing method of the embodiment for turning a reaction gas into a thermal plasma. "Combustion synthesis 1" and "combustion synthesis 2" indicate self-propagating high-temperature synthesis that does not involve turning a reaction gas into a thermal plasma. In "combustion synthesis 1", synthesized ceramics are not pulverized. In "combustion synthesis 2", synthesized ceramics are pulverized.

In the embodiment, the method of controlling the reactor pressure by controlling the nitrogen gauge pressure is used as a scheme of controlling a self-propagating high-temperature synthesis reaction. This allows omitting the steps of pulverizing ceramics and adding a moderator so that the cost of manufacturing ceramics can be reduced to 1 yen/g or lower.

According to the statistics of year 2010, 1.36×10¹⁶ Wh of electric energy is consumed in the world. As mentioned above, 1.4 kWh of electric power can be generated per 1kg of reaction product by using SiO₂, which is a main component of the sand in a desert, metal silicon, etc., as novel sources of energy in self-propagating high-temperature synthesis. Providing that the efficiency is 100%, the reaction heat corresponding to the total amount of electric energy indicated above can be generated by synthesizing 10 billion tons of reaction product by using the self-propagating high-temperature synthesis system 100 according to the first embodiment.

It is desired, however, that structural ceramics as synthesized be used as general-purpose industrial materials. To this end, the price of ceramics need be acceptable. It is reported in Sunshine Project and Moonlight project that there is sufficient background that welcomes the use of structural ceramics in fine powder form in a large quantity as a general-purpose material for industrial applications, and, in particular, automobile applications. Prototype data for silicon-nitrogen-based structural ceramics are collected in the automobile industry. For example, design appraisal of silicon-nitrogen-based structural ceramics for life and strength is available in engines, underbody, power train components, etc. However, attempts to employ ceramics have been shelved due to the high price. Meanwhile, structural ceramic powder can be produced at the cost of 1 yen/g according to the embodiment.

Plasma generation devices provided with the reactor 201and the controller 210 configured to regulate the amount of supply of the N₂ gas to the reactor 201 so that the pressure in the reactor 201 is 0.9 GPa or higher and turn a reaction gas into a thermal plasm are also encompassed by the embodiment. Power generation devices provided with such a plasma generation device and the MHD power generation device 202 are also encompassed by the embodiment.

### [DESCRIPTION OF THE REFERENCE NUMERALS]

1 supplying unit, 2 reaction unit, 3 retrieval unit, 4 carrier gas supply inlet, 5 powder source supply inlet, 6 injection nozzle, 7 ignition unit, 8 heat collection unit, 9 power generation unit, 10 temperature measurement unit, 11, 18 internal pressure measurement unit, 12, 14 internal pressure regulation valve, 13 water quantity regulation valve, 15 collection unit, 16 gas discharge outlet, 17 gas discharge outlet, 19 heat exchanger, 20 controller, 100 self-propagating high-temperature synthesis system, 201 reactor, 202 MHD power generation device, 204 depressurization chamber, 210 controller, 212 adiabatic expansion chamber, 213 pulverization nozzle

### [INDUSTRIAL APPLICABILITY]

The present invention can be used in self-propagating high-temperature synthesis systems, reaction products, articles, self-propagating high-temperature synthesis methods, power generation systems, plasma generation devices, and power generation devices.

## Claims

1. A self-propagating high-temperature synthesis system comprising:
a supplying unit that produces a composite by mixing particle powder containing Si, particle powder containing SiO₂, and an N₂ gas;
a reaction unit having heat resistance and pressure resistance in which self-propagating high-temperature synthesis that uses the composite supplied from the supplying unit as a source material proceeds;
an ignition unit that ignites the composite supplied to the reaction unit; and
a heat collection unit that takes reaction heat from a self-propagating high-temperature synthesis reaction in the reaction unit out of the reaction unit.

2. The self-propagating high-temperature synthesis system according to claim 1, wherein
the supplying unit mixes the particle powder containing Si and SiO₂ and the N₂ gas by using a fluidized bed.

3. The self-propagating high-temperature synthesis system according to claim 1 or 2, wherein the heat collection unit takes out the reaction heat from the self-propagating high-temperature synthesis reaction by exchanging heat with water as a heat medium.

4. The self-propagating high-temperature synthesis system according to one of claims 1 to 3, further comprising:
a retrieval unit that retrieves a reaction product, containing silicon oxynitride-based ceramics, outside the reaction unit.

5. The self-propagating high-temperature synthesis system according to claim 4, wherein
the retrieval unit maintains an interior of the retrieval unit at a pressure lower than an interior of the reaction unit and expands and cools a gas containing the reaction product.

6. The self-propagating high-temperature synthesis system according to one of claims 1 to 5, wherein
the particle powder containing SiO₂ is sand.

7. The self-propagating high-temperature synthesis system according to one of claims 1 to 6, wherein
the supplying unit produces the composite by further mixing Al.

8. A reaction product containing silicon oxynitride-based ceramics produced by the self-propagating high-temperature synthesis system according to one of claims 1 to 7.

9. An article formed by using the reaction product according to claim 8.

10. A self-propagating high-temperature synthesis method comprising:
producing a composite by mixing particle powder containing Si, particle powder containing SiO₂, and an N₂ gas;
initiating a reaction by using a reaction unit having heat resistance and pressure resistance in which self-propagating high-temperature synthesis that uses the composite supplied as a source material proceeds;
igniting the composite accommodated in the reaction unit; and
taking reaction heat from a self-propagating high-temperature synthesis reaction in the reaction unit out of the reaction unit.

11. The self-propagating high-temperature synthesis method according to claim 10, further comprising:
retrieving a reaction product containing silicon oxynitride-based ceramics outside the reaction unit.

12. An electric power generation system comprising:
a reaction unit supplied with a composite produced by mixing particle powder containing Si, particle powder containing SiO₂, and an N₂ gas and allowing self-propagating high-temperature synthesis that uses the composite as a source material to proceed inside;
a controller that regulates an amount of the N₂ gas supplied to the reaction unit so that a pressure in the reaction unit is 0.9 GPa or higher and turns a reaction gas produced in the self-propagating high-temperature synthesis into a thermal plasma;
a depressurization unit in which a pressure is lower than a pressure in the reaction unit and a temperature is higher than a sublimation temperature of the reaction gas;
a power generation unit that communicates an interior of the reaction unit with an interior of the depressurization unit, causes the reaction gas turned into a thermal plasma to flow from the reaction unit to the depressurization unit, and performs MHD power generation by the flow; and
an adiabatic expansion chamber that communicates with the depressurization unit and receives a flow of the reaction gas in the depressurization unit to form a solid reaction product, a temperature in the adiabatic expansion chamber being lower than a sublimation temperature of the reaction gas.

13. A plasma generation device comprising:
a reaction unit supplied with a composite produced by mixing particle powder containing Si, particle powder containing SiO₂, and an N₂ gas and allowing self-propagating high-temperature synthesis that uses the composite as a source material to proceed inside; and
a controller that regulates an amount of supply of the N₂ gas supplied to the reaction unit so that a pressure in the reaction unit is 0.9 GPa or higher and turns a reaction gas produced in the self-propagating high-temperature synthesis into a thermal plasma.

14. An electric power generation device comprising:
the plasma generation device according to claim 13; and
a power generation unit that performs MHD power generation by causing the reaction gas produced in the plasma generation device and turned into a thermal plasma to flow.
